# EUROPEAN PATENT APPLICATION

(11) **EP 3 537 358 A1**
(43) Date of publication of application: **11.09.2019**
(21) Application number: 19160504.7
(22) Date of filing: 04.03.2019
(51) Int. Cl.: G06Q 20/20, G06Q 20/38, G06Q 20/42, G07G 1/00

(54) **SALES DATA PROCESSING APPARATUS, INFORMATION PROCESSING APPARATUS, AND INFORMATION PROCESSING METHOD**

(30) Priority: 05.03.2018 JP 2018038174
(71) Applicant: Toshiba Tec Kabushiki Kaisha, 141-8562 Tokyo (JP)
(72) Inventor: Naito, Hidehiro, Tokyo, 141-8562 (JP); Iizaka, Hitoshi, Tokyo, 141-8562 (JP); Miyakoshi, Hidehiko, Tokyo, 141-8562 (JP); Kawaguchi, Yuki, Tokyo, 141-8562 (JP); Ogomori, Naoki, Tokyo, 141-8562 (JP)
(74) Representative: Hoffmann Eitle

(57) **Abstract**

A sales data processing apparatus includes an imaging unit and a control unit. The control unit is configured to cause the imaging unit to capture an image of an item, identify a candidate item corresponding to the item by object recognition processing on the image, transmit identification information for the candidate item and the image of the item to an external device; and then receive a confirmation result from the external device indicating whether or not the item included in the image matches the candidate article according to the transmitted identification information.

## Description

### CROSS-REFERENCE TO RELATED APPLICATION

This application is based upon and claims the benefit of priority from Japanese Patent Application No. 2018-038174, filed in March 5, 2018, the entire contents of which are incorporated herein by reference.

### FIELD

Embodiments described herein relate to a sales data processing apparatus, an information processing apparatus, and an information processing method.

### BACKGROUND

In the related art, there is a technique related to generic object recognition for identifying a target article by extracting a feature value for the target article from an image captured by an imaging unit and then comparing the extracted feature value with a previously stored reference feature value. A point of sales (POS) system that identifies an item being sold using object recognition has been proposed.

In addition, there are also known self-service checkout POS terminals in which the customer executes the registration process for registering the items being sold in a sales transaction and then also the transaction settlement processing for the registered items.

Object recognition has been considered for use in self-service checkout POS terminals. However, recognition accuracy with object recognition is not yet perfect. Thus, a method in which a store clerk confirms an object recognition result might be required. However, it is typically troublesome for the store clerk to visit the self-service checkout POS terminal for object recognition confirmation every time such confirmation might be required.

### SUMMARY OF THE INVENTION

One of the objects of the present invention is to improve prior art techniques and overcome at least some of the prior art problems as for instance above illustrated.

According to a first aspect of the present invention, it is provided a sales data processing apparatus, comprising: an imaging unit; and a control unit configured to: cause the imaging unit to capture an image of an item; identify a candidate item corresponding to the item by object recognition processing on the image; transmit identification information for the candidate item and the image of the item to an external device; and receive a confirmation result from the external device indicating whether or not the item included in the image matches the candidate article according to the transmitted identification information.

Optionally, in the sales data processing apparatus according to the first aspect of the invention, the item is a cash voucher.

Optionally, the sales data processing apparatus according to the first aspect of the invention further comprises an image processing unit configured to execute an imaging processing on the image for improving visibility of the item in the image.

Optionally, the sales data processing apparatus according to the first aspect of the invention further comprises a storage unit storing a plurality of candidate cash voucher images, wherein the item is a cash voucher, and the transmitted identification information includes at one candidate cash voucher image.

Optionally, the sales data processing apparatus according to the first aspect of the invention further comprises a display screen, wherein the control unit is further configured to display at least one candidate cash voucher image on the display according to a calculated degree of similarity of the cash voucher in the image to the at least one candidate cash voucher image and receive a user selection of a candidate cash voucher image.

Optionally, in the sales data processing apparatus according to the first aspect of the invention, the imaging unit captures a plurality of images of the item.

Optionally, in the sales data processing apparatus according to the first aspect of the invention, the control unit comprises a central processing unit.

Optionally, in the sales data processing apparatus according to the first aspect of the invention, the imaging unit comprises a charge-coupled device array.

Optionally, in the sales data processing apparatus according to the first aspect of the invention, the imaging unit configured to capture a color image, the image of the item is a color image, and the candidate item is identified at least in part according to a color of the item.

According to a second aspect of the present invention, it is provided a checkout system, comprising: a plurality of self-service sales data processing devices; and an attendant terminal connected to the plurality of self-service sales data processing devices, wherein each self-service data processing device includes: an imaging unit; and a control unit configured to: cause the imaging unit to capture an image of an item; identify a candidate item corresponding to the item by object recognition processing on the image; transmit identification information for the candidate item and the image of the item to the attendant terminal; and receive a confirmation result from the attendant terminal indicating whether or not the item included matches the candidate article according to the transmitted identification information.

Optionally, in the checkout system according to the second aspect of the invention, the item is a cash voucher.

Optionally, in the checkout system according to the second aspect of the invention, the attendant terminal includes: a communication interface for receiving the transmitted identification information; a display screen for displaying the transmitted identification information; and an operator input device for inputting an operator selection for indicating whether or not the item included in the image matches the candidate item and generating the confirmation result.

Optionally, in the checkout system according to the second aspect of the invention, the display screen displays the image of the item and a reference image of the candidate item included in the transmitted identification information.

Optionally, in the checkout system according to second aspect of the invention, the operator input device comprises a touch panel on the display screen.

According to a third aspect of the present invention, it is provided a non-transitory computer readable medium storing program instructions that when executed in a sales data processing apparatus causes a control unit thereof to perform a method comprising: causing an imaging unit to capture an image of an item; identifying a candidate item corresponding to the item by object recognition processing on the image; transmitting identification information for the candidate item and the image of the item to an external device; and receiving a confirmation result from the external device indicating whether or not the item included in the image matches the candidate article according to the transmitted identification information.

Optionally, in the non-transitory computer readable medium of the third aspect of the invention, the item is a cash voucher.

Optionally, the non-transitory computer readable medium of the third aspect of the invention, the method further comprises executing an imaging processing on the image for improving visibility of the item in the image.

Optionally, the non-transitory computer readable medium of the third aspect of the invention, the method further comprises displaying at least one candidate item image on the display according to a calculated degree of similarity of the item in the image to the at least one candidate item image; and receiving a user selection of a candidate item image.

Optionally, in the non-transitory computer readable medium of third aspect of the invention, the item is a cash voucher or a coupon.

Optionally, in the non-transitory computer readable medium of the third aspect of the invention, the external device is an attendant terminal of a checkout system.

### DESCRIPTION OF THE DRAWINGS

FIG. 1 depicts a self-service checkout POS system according to an embodiment.
FIG. 2 is a block diagram illustrating a hardware configuration of a self-service checkout POS terminal.
FIG. 3 schematically depicts a data configuration of a cash voucher information table.
FIG. 4 is a block diagram illustrating a hardware configuration of an attendant terminal.
FIG. 5 schematically depicts a functional configuration of devices in a self-service checkout POS system.
FIG. 6 depicts a confirmation screen.
FIG. 7 is a flowchart of a cash voucher confirming process executed by a self-service checkout POS terminal in an embodiment.

### DETAILED DESCRIPTION

An problem to be solved in an example embodiment is to reduce store clerk labor required for confirmation of recognition results provided by object recognition in self-service checkout type POS systems.

According to one embodiment, a sales data processing apparatus comprises an imaging unit and a control unit. The control unit is configured to cause the imaging unit to capture an image of an item, identify a candidate item corresponding to the item by object recognition processing on the image, transmit identification information for the candidate item and the image of the item to an external device, and receive a confirmation result from the external device indicating whether or not the item included in the image matches the candidate article according to the transmitted identification information.

In general, according to another embodiment, a sales data processing apparatus includes imaging control means, extraction means, first transmission means, and first receiving means. The imaging control means causes an imaging unit to capture an image. The extraction means extracts a candidate article of an article included in the image captured by the imaging control means. The first transmission means transmits article identification information of the candidate article extracted by the extraction means and the image of the candidate article. The first receiving means receives confirmation result information indicated by a confirmation result whether or not the article included in the image transmitted by the first transmission means matches the candidate article of the article identification information.

Hereinafter, certain example embodiments of a sales data processing apparatus, an information processing apparatus, and an information processing method will be described with reference to the accompanying drawings . The examples described do not limit the present disclosure. The described examples of a sales data processing apparatus, an information processing apparatus, and an information processing method applied, in general, to a self-service checkout POS terminal and an attendant terminal in a retail shop such as a supermarket. However, embodiments of the present disclosure are not necessarily limited to this particular technical application. In addition, in the described examples, an article/item/object being recognized by object recognition methods is a cash voucher such as a gift certificate or a coupon; however the article/item/object to be recognized is not limited to this category of objects.

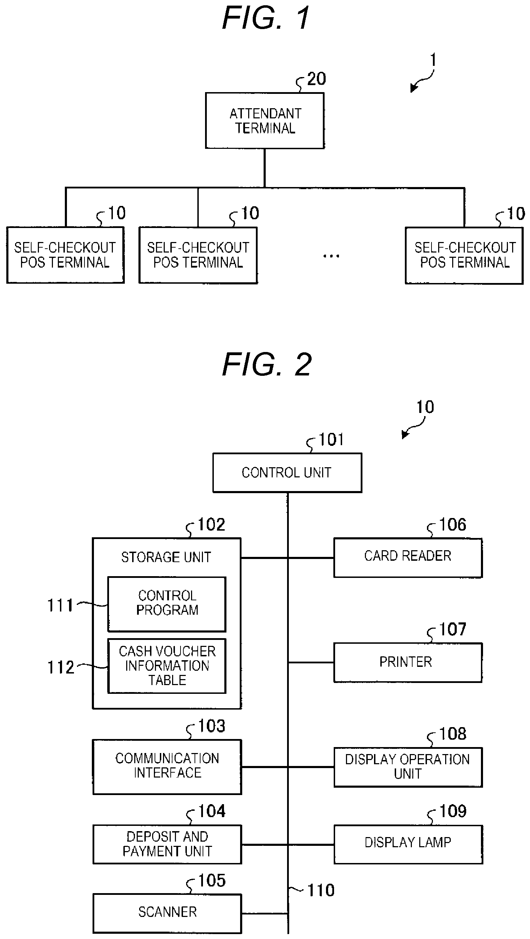

FIG. 1 is an explanatory view illustrating an example a self-service checkout POS system 1 according to an embodiment. The self-service checkout POS system 1 is a system in which a customer at a retail store, such as a supermarket, performs commodity registration and settlement accounting for a commodity being purchased himself/herself. The self-service checkout POS system 1 includes a plurality of self-service checkout POS terminals 10 and an attendant terminal 20. The self-service checkout POS terminals 10 and the attendant terminal 20 are able to communicate by at least one of a wired or a wireless connection.

The self-service checkout POS terminal 10 is a sales data processing apparatus that executes a registration process for registering a commodity being sold and an settlement accounting process for the registered commodity by operation of the customer. The self-service checkout POS terminal 10 includes a scanner 105 (see FIG. 2). The scanner 105 is capable of capturing an image of an article, such as the cash voucher, held in front of the scanner 105. The self-service checkout POS terminal 10 recognizes the cash voucher in the image captured by the scanner 105 using generic object recognition.

The attendant terminal 20 is an information processing apparatus such as another POS terminal or a personal computer operated by a store clerk referred to in this context as an attendant. The attendant terminal 20 is associated with a plurality of self-service checkout POS terminals 10. The attendant terminal 20 displays states of the plurality of associated self-service checkout POS terminals 10. In addition, the attendant terminal 20 is operable to assist the self-service checkout POS terminals 10 according to the state of the self-service checkout POS terminals 10.

The self-service checkout POS terminal 10 identifies one or a plurality of candidate cash vouchers by the object recognition applied to an image captured by the scanner 105. The customer operating the self-service checkout POS terminal 10 selects an extracted candidate cash voucher. The self-service checkout POS terminal 10 transmits a confirmation request to the attendant terminal 20 for requesting confirmation as to whether or not an imaged cash voucher matches the customer-selected candidate cash voucher.

A self-service checkout POS terminal code, a cash voucher code, the number of the cash vouchers, and a processed image are included in the confirmation request. The self-service checkout POS terminal code is identification information capable of identifying the self-service checkout POS terminal 10. That is, the self-service checkout POS terminal code is information indicating the particular self-service checkout POS terminal 10 as the source of the confirmation request. The cash voucher code is identification information capable of identifying the particular type of the selected cash voucher. That is, the cash voucher code is information indicating the one candidate cash voucher selected from the candidate cash vouchers. The number of the cash vouchers indicates the total number of the cash vouchers being used in the customer transaction. The processed image is an image of the cash voucher as captured by the self-service checkout POS terminal 10. In addition, when several cash vouchers are being used in a single transaction, a cash voucher code, a number of the cash vouchers by type, and a processed image for each cash voucher type can be included in the confirmation request.

The attendant terminal 20 displays various kinds of information included in the received confirmation request. The attendant terminal 20 receives confirmation from the store clerk as to whether or not the cash voucher in the processed image included in the confirmation request information matches the selected cash voucher code. The attendant terminal 20 transmits a confirmation result from the store clerk to the self-service checkout POS terminal 10 matching the self-service checkout POS terminal code included in the confirmation request. The self-service checkout POS terminal 10 displays the confirmation result. In addition, the self-service checkout POS terminal 10 executes a process according to the confirmation result.

FIG. 2 is a block diagram illustrating an example of the hardware configuration of a self-service checkout POS terminal 10. The self-service checkout POS terminal 10 includes a control unit 101, a storage unit 102, a communication interface 103, a deposit and payment unit 104, the scanner 105, a card reader 106, a printer 107, a display operation unit 108, and a display lamp 109. These units are connected to each other via a system bus 110 such as a data bus or an address bus.

The control unit 101 is a computer that controls an operation of an entirety of the self-service checkout POS terminal 10 and realizes various functions included in the self-service checkout POS terminal 10. The control unit 101 includes a Central Processing Unit (CPU), a Read Only Memory (ROM), and a Random Access Memory (RAM). The CPU generally controls an operation of the self-service checkout POS terminal 10. The ROM is a storage medium for storing various programs or data. The RAM is a storage medium for temporarily storing various programs or various data. The CPU executes a program stored in the ROM, the storage unit 102, or the like with the RAM as a work area (work region).

The storage unit 102 is a storage device such as a Hard Disk Drive (HDD) or a Solid State Drive (SSD). The storage unit 102 stores a control program 111 and a cash voucher information table 112.

The control program 111 is a program for implementing a function included in an operating system or the self-service checkout POS terminal 10. The control program 111 includes a program for implement a function according to an embodiment.

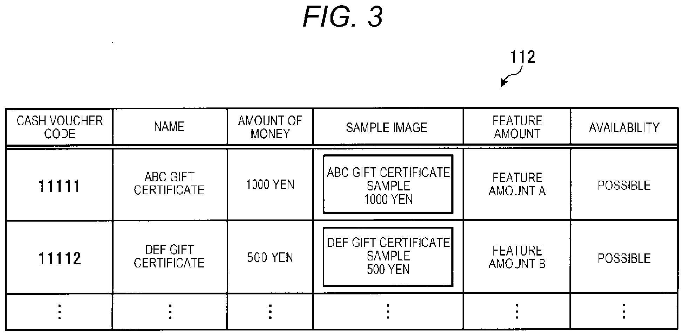

FIG. 3 is an explanatory view of an example of a data configuration of the cash voucher information table 112. The cash voucher information table 112 is an information table for storing various kinds of information related to the cash vouchers. The cash voucher information table 112 stores the cash voucher code, a voucher name, an amount of money (voucher value), a sample image of the voucher, the feature value, and availability information in association with each other. The cash voucher code is capable of identifying the type of the cash voucher. The voucher name provides a name of the cash voucher. The amount of money indicates the value of the cash voucher. The sample image an image which is a reference image for the cash voucher. The feature value corresponds to a feature of an exterior of the cash voucher to be used in object recognition. The features of the exterior of the cash voucher that can be used in recognition processing may include a size of the cash voucher, a shape of the cash voucher, text information such as the number and letters printed on the cash voucher, a color on the cash voucher, or the like. The availability information indicates whether or not the cash voucher can be used for settlement accounting according to various possible pre-conditions such as date, time, location, registration of related transaction items, discount club membership, etc. In some contexts, availability information may be referred to as availability conditions.

The communication interface 103 executes communication with an external device connected via a network. For example, the communication interface 103 executes communication with the attendant terminal 20 connected via a network.

The deposit and payment unit 104 is an automatic change machine that receives and payouts money the settlement accounting process. The deposit and payment unit 104 stores money such as coins and banknotes deposited via a deposit port. In addition, the deposit and payment unit 104 dispenses money such as coins and banknotes via a dispensing port as change.

The scanner 105 includes an imaging unit, such as a color CCD image sensor or a color CMOS image sensor, for capturing an image of an article held in front of the self-service checkout POS terminal 10 and an illumination unit. The scanner 105 captures images at a frame rate of, for example, 30 frame per second (fps), or the like. The scanner 105 stores the captured images in the RAM, or the like.

The card reader 106 is a device that executes reading of information stored on a card used for settlement purposes such as a credit card or the like.

The printer 107 prints transaction details and the like on receipt paper.

The display operation unit 108 is, for example, a liquid crystal display device on which a touch panels is stacked.

The display lamp 109 is a warning lamp for notifying the store clerk of occurrence of an abnormality or the like in the self-service checkout POS terminal 10.

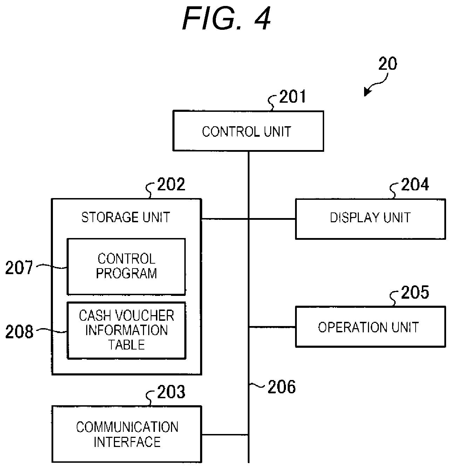

FIG. 4 is a block diagram illustrating an example of a hardware configuration of the attendant terminal 20. The attendant terminal 20 includes a control unit 201, a storage unit 202, a communication interface 203, a display unit 204, and an operation unit 205. These units are connected to each other via a system bus 206 such as a data bus or an address bus.

The control unit 201 is a computer that controls an operation of an entirety of the attendant terminal 20 and realizes the various functions of the attendant terminal 20. The control unit 201 includes a CPU, a ROM, and a RAM. The CPU generally controls an operation of the attendant terminal 20. The ROM stores various programs or data. The RAM temporarily stories various programs (or portions thereof) or various data. The CPU executes a program stored in the ROM, the storage unit 202, or the like with the RAM as a work area (work region).

The storage unit 202 is a storage device such as a HDD or a SSD. The storage unit 202 stores a control program 207 and a cash voucher information table 208.

The control program 207 is a software program or the like for implementing functions of an attendant terminal 20 according to the embodiment.

Similar to the cash voucher information table 112 stored in the storage unit 102 of the self-service checkout POS terminal 10, the cash voucher information table 208 is an information table for storing various kinds of information about cash vouchers.

The communication interface 203 executes communication with a device connected via a network. For example, the communication interface 203 executes communication with the self-service checkout POS terminal 10 connected via a network.

The display unit 204 is, for example, a liquid crystal display device. Moreover, the display unit 204 is, for example, a liquid crystal display device in which a touch panel is stacked.

The operation unit 205 is, for example, an input device by which user/operator inputs are provided such as a keyboard, a mouse, or the like.

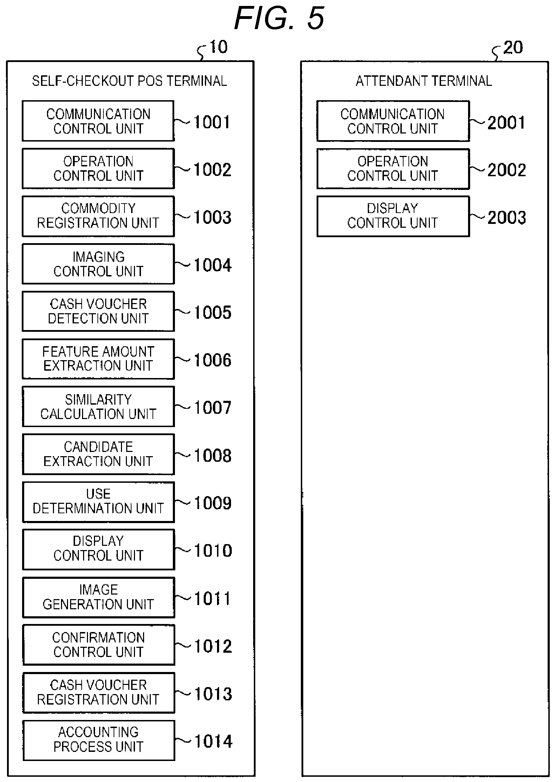

FIG. 5 is a block diagram illustrating schematically various functional aspects included in various devices of the self-service checkout POS system 1.

The control unit 101 of the self-service checkout POS terminal 10 loads the control program 111 in the RAM and operates in accordance with the control program 111 to generate various functional units illustrated in FIG. 5 on the RAM. Specifically, the control unit 101 of the self-service checkout POS terminal 10 functional units including a communication control unit 1001, an operation control unit 1002, a commodity registration unit 1003, an imaging control unit 1004, a cash voucher detection unit 1005, a feature value extraction unit 1006, a similarity calculation unit 1007, a candidate extraction unit 1008, a use determination unit 1009, a display control unit 1010, an image generation unit 1011, a confirmation control unit 1012, a cash voucher registration unit 1013, and an accounting process unit 1014.

The communication control unit 1001 controls the communication interface 103 and controls communication to/from a device connected to a network. For example, the communication control unit 1001 controls communication with the attendant terminal 20.

The operation control unit 1002 controls the display operation unit 108 to receive various user operations.

The commodity registration unit 1003 controls a commodity registration process for registering a commodity in a sales transaction. For example, the commodity registration unit 1003 registers a commodity identified by a read commodity code when the scanner 105 reads the commodity code. The commodity registration unit 1003 is not limited to reading of the commodity code and may register a commodity specified by a user input.

The imaging control unit 1004 controls the scanner 105 to capture an image. The imaging control unit 1004 stores images sequentially captured by the scanner 105 in the RAM or the like.

The cash voucher detection unit 1005 detects the cash voucher included in the image captured by the scanner 105. For example, the cash voucher detection unit 1005 detects a part or all of the cash vouchers included in the image by using a pattern matching technique or the like. Specifically, the cash voucher detection unit 1005 extracts an outline or the like from an image obtained by binarizing an image. The cash voucher detection unit 1005 detects the cash voucher based on a difference between an outline extracted from a reference image which is prepared in advance and an outline extracted from an image of the detection object. Here, the reference image is an image prepared in advance by capturing a background image with no cash voucher with the scanner 105. Therefore, the cash voucher detection unit 1005 can detect an outline of a cash voucher in a captured image by comparison to the reference image prepared in advance

The feature value extraction unit 1006 extracts the feature value (s) of the exterior of the cash voucher detected by the cash voucher detection unit 1005. That is, the feature value extraction unit 1006 extracts the feature values such as the size of the cash voucher, the shape of the cash voucher, the text information such as the number and letters printed on the cash voucher, and the color of the cash voucher in the image captured by the scanner 105.

The similarity calculation unit 1007 calculates a degree of similarity for each type of the cash voucher registered in the cash voucher information table 112 by comparing a reference feature value for the cash voucher registered in the cash voucher information table 112 with the feature value of the cash voucher as extracted by the feature value extraction unit 1006. Here, the degree of similarity indicates to what extent all or a part of the cash voucher is similar according to the reference feature value(s) of the cash voucher stored in the cash voucher information table 112 in which 100% similarity corresponds to total similarity (identical) or "degree of similarity: 1.0". Moreover, the similarity calculation unit 1007 may calculate, for example, a degree of similarity by weighting different feature value types (e.g., the size, the shape, the character information, and the color) differently.

As described above, recognizing an object included in an image is referred to as "generic object recognition." Regarding such generic object recognition, various known recognition techniques are described in the following document: Keiji Yanai, "Present and Future of General Object Recognition", Transactions of the Information Processing Society, Vol. 48, No. SIG 16, [Search February 23, 2018], Internet <URL:http://mm.cs.uec.ac.jp/IPSJ-TCVIM-Yanai.pdf>

In addition, a technique for performing generic object recognition by segmenting an image is described in the following document: Jamie Shotton et al. , "Semantic Texton Forests for Image Categorization and Segmentation", [Search February 23, 2018], Internet<URL: http://citeseerx.ist.psu.edu/viewdoc/download?doi=10.1. 1.145.3036 & rep = rep1 & type = pdf>

Moreover, there is no particular limitation on the methodology used for calculating the degree of similarity between the reference feature values of various cash vouchers included in the cash voucher information table 112 and the extracted feature values of the cash voucher. For example, the similarity calculation unit 1007 may calculate the degree of similarity between a reference feature value of the cash voucher included in the cash voucher information table 112 and the feature value of the cash voucher as extracted by the feature value extraction unit 1006 as an absolute evaluation or may calculate the degree of similarity as a relative evaluation.

The candidate extraction unit 1008. The candidate extraction unit 1008 extracts article identification information corresponding to a candidate article for the article included in the image captured by the imaging control unit 1004. More specifically, the candidate extraction unit 1008 extracts the cash voucher code of the candidates based on the degree of similarity to the various reference cash vouchers as calculated by the similarity calculation unit 1007. For example, the candidate extraction unit 1008 extracts the cash voucher code of one or a plurality of reference cash vouchers for which the degree of similarity is equal to or greater than some threshold.

The use determination unit 1009 determines whether or not the candidate cash voucher extracted by the candidate extraction unit 1008 is useable for purposes of settlement. For example, the use determination unit 1009 determines whether or not the candidate cash voucher is useable based on a listing of the voucher in the cash voucher information table 112. When the cash voucher information table 112 indicates the voucher (more specifically the cash voucher code for the candidate cash voucher) to be useable (available for use), the use determination unit 1009 determines that the cash voucher can be used for transaction accounting/settlement. In addition, when the cash voucher information table 112 indicates the voucher (more specifically the cash voucher code for the candidate cash voucher_ to be un-useable, the use determination unit 1009 determines that the cash voucher information table 112 cannot be used in transaction accounting/settlement.

The display control unit 1010 controls the display operation unit 108 to display various screens. For example, the display control unit 1010 displays an operation screen for guiding an operation of the self-service checkout POS terminal 10. More specifically, the display control unit 1010 displays, for example, a cash voucher recognition screen. The cash voucher recognition screen is a screen for selecting one candidate cash voucher in a confirmation request from the other candidate cash vouchers extracted by the candidate extraction unit 1008 in the object recognition.

The cash voucher recognition screen includes an image display region and a candidate selection region. The image display region is a region for displaying an image captured by the scanner 105. The candidate selection region is a region for displaying each of the candidate cash vouchers extracted by the candidate extraction unit 1008. The candidate selection region includes, for example, the cash voucher code, the name, the amount of money, the sample image, or the like of each candidate cash voucher read from the cash voucher information table 112. The customer, who is an operator of the self-service checkout POS terminal 10, selects one candidate cash voucher from the candidate selection region.

In addition, when one candidate cash voucher is selected from the candidate selection region, the display control unit 1010 displays a sheet number input screen requesting the input of the number of used sheets (instances) of the selected candidate cash voucher. For example, the sheet number input screen includes a number button. The customer inputs the number of sheets being used by selecting a desired number button.

In addition, the display control unit 1010 displays a screen indicating whether or not the cash voucher of the candidate cash voucher is useable based on a determination result from the use determination unit 1009. For example, when the cash voucher of the candidate cash voucher is unuseable, the display control unit 1010 displays a message or the like indicating that the candidate cash voucher is unuseable.

In addition, the display control unit 1010 displays confirmation result information received from the attendant terminal 20 as a response to the confirmation request transmitted by the communication control unit 1001. For example, the display control unit 1010 displays the confirmation result from the store clerk as to whether or not the cash voucher in the processed image transmitted by the communication control unit 1001 matches the selected candidate cash voucher (cash voucher code) included in the confirmation request.

The image generation unit 1011 is an example of an image processing unit. The image generation unit 1011 executes an imaging process for improving visibility of the images captured by the scanner 105. For example, the image generation unit 1011 executes an imaging process such as a trimming process or a trapezoidal correction process on the image captured by the scanner 105. The trimming process is a process of cutting out an image of the cash voucher portion in the image captured by the scanner 105. The trapezoidal correction process is a process of correcting the image of the cash voucher portion as cut out by the trimming process to a rectangular shape. For example, if the cash voucher held to be inclined or the like with respect to scanner 105, a rectangular cash voucher becomes a trapezoid shape in the image captured by the scanner 105. The image generation unit 1011 corrects the trapezoidal shape into a rectangular shape by a trapezoidal correction process.

The confirmation control unit 1012 is an example of a first transmission unit and a first receiving unit. The confirmation control unit 1012 controls the transmission of the confirmation request in cooperation with the communication control unit 1001. More specifically, the confirmation control unit 1012 transmits confirmation request to the attendant terminal 20. The confirmation request provides information including the cash voucher code selected via the cash voucher recognition screen, the number of used candidate cash vouchers input into the number input screen, and the processed image of the candidate cash voucher from the image generation unit 1011. The confirmation control unit 1012 may transmit the confirmation request to a relay device that relays the confirmation request to the attendant terminal 20. In this case, the relay device re-transmits the confirmation request to the attendant terminal 20.

The confirmation control unit 1012 receives the confirmation result for the transmitted confirmation request. The confirmation result includes information indicating whether or not the cash voucher in the processed image is considered by the store clerk to match the customer-selected candidate cash voucher.

When the confirmation result indicates approval (confirmation), the cash voucher registration unit 1013 registers the selected candidate cash voucher as a cash voucher being used in the transaction. On the other hand, when the confirmation result indicates rejection (disapproval), the cash voucher registration unit 1013 does not register the selected candidate cash voucher as a cash voucher being used in the transaction.

The accounting process unit 1014 controls the settlement accounting process of the registered commodities registered by the commodity registration unit 1003. For example, the accounting process unit 1014 calculates a total sales price for the registered commodities. In addition, the accounting process unit 1014 calculates a change amount due by subtracting the total sales price from the amount of money received from the customer. Furthermore, when a cash voucher is registered by the cash voucher registration unit 1013, the accounting process unit 1014 subtracts the total value of the registered cash voucher from the total sales price o. In this way, the accounting process unit 1014 calculates the total amount of money due in the sales transaction.

The control unit 201 of the attendant terminal 20 loads the control program 207 to the RAM and operates according to the control program 207 to generate each of function units illustrated in FIG. 5. Specifically, the control unit 201 functionally includes a communication control unit 2001, an operation control unit 2002, and a display control unit 2003

The communication control unit 2001 is an example of a second transmission unit and a second receiving unit. The communication control unit 2001 controls the communication interface 203 and controls communication with a device connected to a network. For example, the communication control unit 2001 controls communication with the self-service checkout POS terminal 10. For example, the communication control unit 2001 receives the confirmation request from the self-service checkout POS terminal 10. In addition, the communication control unit 2001 transmits the confirmation result to the self-service checkout POS terminal 10 according to the self-service checkout POS terminal code included in the confirmation request.

The operation control unit 2002 is an example of an input unit. The operation control unit 2002 controls the operation unit 205 to receive various user operations/inputs/selections. In addition, when a touch panel is stacked on the display unit 204, the operation control unit 2002 controls the display unit 204 to receive various operations/inputs/selections. For example, from a screen displayed by the display control unit 2003, the operation control unit 2002 receives the inputting of the confirmation result indicating whether or not the cash voucher in the processed image included in the confirmation request matches the customer-selected candidate cash voucher.

The display control unit 2003 controls the display unit 204 to display various screens. For example, the display control unit 2003 displays a state list screen displaying respective states of the connected self-service checkout POS terminals 10. More specifically, when the communication control unit 2001 receives the confirmation request information, the display control unit 2003 displays, for example, a confirmation screen G1.

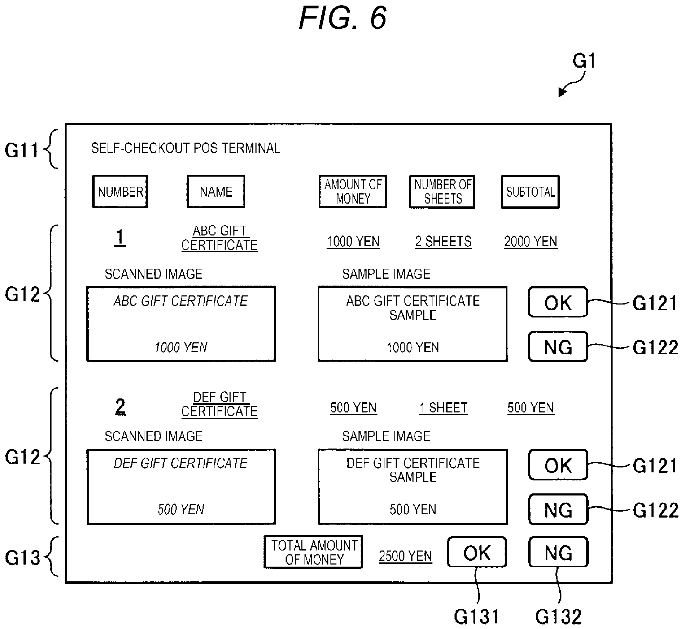

FIG. 6 is an explanatory view illustrating an example of the confirmation screen G1. The confirmation screen G1 is a screen for confirming whether or not the cash voucher captured by the self-service checkout POS terminal 10 matches the candidate cash voucher selected at the self-service checkout POS terminal 10. The confirmation screen G1 includes a self-service checkout POS terminal display region G11, one or a plurality of the confirmation object display region G12, and a total display region G13.

The self-service checkout POS terminal display region G11 is a region for displaying the self-service checkout POS terminal code of the self-service checkout POS terminal 10 that transmitted the confirmation request. The confirmation object display region G12 is a region for displaying information regarding each candidate cash voucher. That is, the confirmation object display region G12 is a region for displaying information regarding the cash voucher corresponding to the cash voucher code included in the confirmation request. The confirmation screen G1 illustrated in FIG. 6 includes two confirmation object display regions G12 because two types of the candidate cash vouchers are included in the confirmation request information.

The confirmation object display region G12 includes a number, a name, an amount of money, the number of sheets, a subtotal, a scanned image, a sample image, an OK button G121, and an NG button G122. The number is a serial number of the candidate cash voucher included in the confirmation request information. The name is a name for the candidate cash voucher associated in the cash voucher information table 208 with the cash voucher code included in the confirmation request . The amount of money is a cash value of the candidate cash voucher associated in the cash voucher information table 208 with the cash voucher code included in the confirmation request . The number of sheets is the total number, as included in the confirmation request, of the candidate cash voucher being used in the transaction. The subtotal is a value obtained by multiplying the cash value by the total number of sheets. The scanned image is a processed image included in the confirmation request. The sample image is a reference image for the candidate cash voucher associated with the selected cash voucher code in the cash voucher information table 208.

The OK button G121 and the NG button G122 are buttons for inputting the confirmation result indicated whether or not the cash voucher of the processed image matches the selected candidate cash voucher in the confirmation request. The OK button G121 is a button to be pressed when the image of the cash voucher captured by the self-service checkout POS terminal 10 is considered to match the selected candidate cash voucher. The NG button G122 is a button to be pressed when the image of the cash voucher captured by the self-service checkout POS terminal 10 is considered not to match the selected candidate cash voucher.

The total display region G13 is a region for displaying a total value of respective cash vouchers in the confirmation object display region G12. In addition, the total display region G13 includes an OK button G131 and an NG button G132. The OK button G131 is a button to be pressed when the total amount of money is correct. The NG button G132 is a button to be pressed when the total amount of money is wrong. When the OK button G131 or the NG button G132 is pressed, the communication control unit 2001 transmits the confirmation result information including the confirmation result of various cash vouchers input by the OK button G121 and the NG button G122.

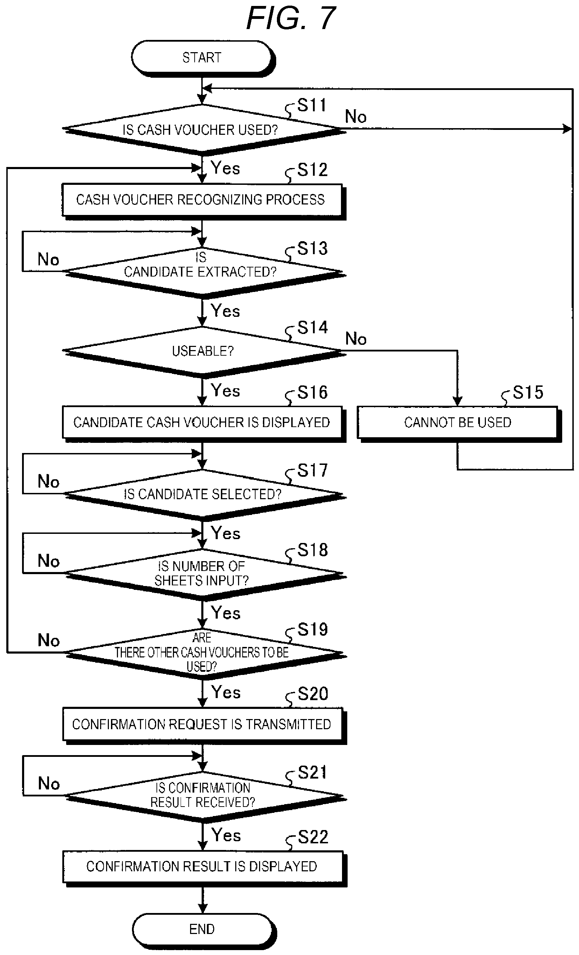

Next, a cash voucher confirming process executed by the self-service checkout POS terminal 10 will be described. Here, FIG. 7 is a flowchart illustrating an example of the cash voucher confirming process executed by the self-service checkout POS terminal 10 of an embodiment.

The operation control unit 1002 receives an operation indicating the attempted use or not of a cash voucher in accounting of a transaction (Act 11). Here, the self-service checkout POS terminal 10 waits until an input or other operation indicates a cash voucher is being used (Act 11; Yes) or is not being used (Act 11; No) in transaction settlement.

The self-service checkout POS terminal 10 executes the cash voucher confirming process (Act 12) when the cash voucher is being used.

More specifically, the display control unit 1010 displays a guide screen requesting that the cash voucher to be used be held in front of the scanner 105. The imaging control unit 1004 captures an image of the case voucher in front of the scanner 105 at a predetermined frame rate. The cash voucher detection unit 1005 executes a detecting process for detecting the cash voucher in an image captured by the imaging control unit 1004. The feature value extraction unit 1006 extracts the feature value (s) of the cash voucher from the cash voucher portion of the image when the cash voucher detection unit 1005 detects the cash voucher in the image. The similarity calculation unit 1007 calculates the degree of similarity for the cash voucher by comparing the feature value extracted by the feature value extraction unit 1006 with the verification (reference feature values of various candidate cash vouchers stored in the cash voucher information table 112. The candidate extraction unit 1008 extracts the candidate cash voucher(s) based on the calculated degree of similarity to the various candidates.

Here, the imaging control unit 1004 captures an image at a predetermined frame rate. Therefore, the cash voucher detection unit 1005, the feature value extraction unit 1006, the similarity calculation unit 1007, and the candidate extraction unit 1008 may execute a cash voucher recognizing process with respect to each image captured at the predetermined frame rate and extract the candidate cash voucher(s) based on a cumulative result from several captured images of the case voucher to be used. When an voucher image having a degree of similarity which is equal to or greater than a predetermined threshold degree of similarity, the candidate extraction unit 1008 may extract the cash voucher as a candidate cash voucher.

The candidate extraction unit 1008 determines whether or not the candidate cash voucher has been extracted by the cash voucher recognizing process (Act 13). The self-service checkout POS terminal 10 waits in Act 13 until the candidate cash voucher is extracted (Act 13; Yes).

The use determination unit 1009 determines whether or not the extracted candidate cash voucher is useable (Act 14)

The display control unit 1010 displays a screen notifying that the candidate cash voucher cannot be used (Act 15) the candidate cash voucher has been determined as unusable for settlement purposes (Act 14; No). Next, the self-service checkout POS terminal 10 returns to Act 11.

The display control unit 1010 displays the cash voucher recognition screen for allowing the customer to select the cash voucher from the candidate cash voucher (s) (Act 16) when candidate cash voucher is useable (Act 14; Yes).

In Act 14, when some cash vouchers among a plurality of candidate cash vouchers extracted by the candidate extraction unit 1008 cannot be used, the self-service checkout POS terminal 10 does not transfer to Act 15 and instead transfers to Act 16. In this case, the display control unit 1010 may display the cash voucher recognition screen that indicates the candidate cash vouchers among the candidate cash vouchers that are not useable and the candidate cash vouchers which are useable.

The operation control unit 1002 determines whether or not an operation of selecting the candidate cash voucher is received (Act 17). The self-service checkout POS terminal 10 waits in Act 17 if the operation for selecting the candidate cash voucher is not yet received (Act 17; No).

The operation control unit 1002 determines whether or not an operation of inputting the use number of the selected candidate cash vouchers (Act 18) if the operation of selecting the candidate cash voucher is received (Act 17; Yes). The self-service checkout POS terminal 10 waits in Act 18 if the operation of inputting the use number of sheets is not yet received (Act 18; No).

The operation control unit 1002 receives an operation for selecting whether or not there are other cash vouchers to be used (Act 19) after the operation for inputting the use number of sheets is received (Act 18; Yes). The self-service checkout POS terminal 10 returns to Act 12 to execute the cash voucher recognizing process for recognizing anothe cash vouchers when other cash vouchers are to be used (Act 19; Yes).

The confirmation control unit 1012 transmits the confirmation request to the attendant terminal 20 associated with the self-device (Act 20) if there is no other cash voucher to be used (Act 19; No).

The communication control unit 1001 determines whether or not the confirmation result has been received (Act 21). The self-service checkout POS terminal 10 waits in Act 21 if the confirmation result information is not yet received (Act 21; No) .

The display control unit 1010 displays the confirmation result information (Act 22) after the confirmation result information is received (Act 21; Yes).

The self-service checkout POS terminal 10 then ends the cash voucher confirming process.

As described above, according to the self-service checkout POS terminal 10 of the embodiment, the scanner 105 captures an image of the held cash voucher. The self-service checkout POS terminal 10 extracts the candidate of the cash voucher included in the image captured by the object recognition. In addition, the self-service checkout POS terminal 10 transmits the cash voucher code indicating the candidate for the extracted cash voucher and the captured image to the attendant terminal 20, and requests confirmation as to whether or not the cash voucher code matches the cash voucher in the image. The self-service checkout POS terminal 10 receives the confirmation result from the attendant terminal 20. Therefore, the store clerk can confirm the cash voucher at the attendant terminal 20 without having to go to the self-service checkout POS terminal 10. Therefore, the self-service checkout POS terminal 10 according to an embodiment can reduce the labor involved in confirmation of the recognition result of the object recognition.

In embodiments described above, a case of recognizing cash vouchers, such as a gift certificate or a coupon, used for purchasing a commodity is described as an example. However, the object of the object recognition is not limited to cash vouchers. For example, the object for the object recognition processing may be a commodity (item for sale) . In such a case, the self-service checkout POS terminal 10 transmits the confirmation request for the candidate commodity to the attendant terminal 20, thereby permitting the store clerk at attendant terminal 20 to confirm whether or not the commodity included in the image matches the selected candidate commodity in the confirmation request. Therefore, the self-service checkout POS terminal 10 can reduce a possibility that a commodity is mis-registered (misidentified) in a sales transaction.

In addition, if the object for the object recognition processing is a commodity, the attendant terminal 20 may determine whether or not the captured image matches the candidate commodity each time the self-service checkout POS terminal 10 recognizes a commodity by the object recognition.

Alternately, the attendant terminal 20 may confirm the commodities of one transaction as a group rather than piecemeal. In this case, for example, when an operation to end the commodity registration is received, the self-service checkout POS terminal 10 transmits images captured during the commodity registration process and the corresponding candidate commodities for each commodity to the attendant terminal 20. The attendant terminal 20 displays the received images and the candidate commodities, and receives input as to whether or not the articles in the captured images match the candidates.

In addition, if the object for the object recognition is a commodity, the attendant terminal 20 may request the store clerk to confirm whether or not the article in the captured image matches the candidate commodity according to some degree of similarity threshold. For example, the attendant terminal 20 displays the confirmation screen G1 only when the degree of similarity between the feature value extracted from the image in a received confirmation request and the selected candidate commodity is less than some threshold, and asks the store clerk for confirmation of the customer selection only in this case. As described above, the attendant terminal 20 can reduce a burden on the store clerk by reducing the number of confirmations required by the store clerk.

In addition, the self-service checkout POS terminal 10 may transmit the confirmation request to the attendant terminal 20 if the degree of similarity of one candidate commodity selected by the customer from candidate commodities is less than the threshold. The self-service checkout POS terminal 10 may not transmit the confirmation request to the attendant terminal 20 if the degree of similarity of one candidate commodity selected by the customer from candidate commodities is equal to or greater than the threshold. Also, in this case, the self-service checkout POS terminal 10 can reduce the burden on the store clerk by reducing the confirmations performed by the store clerk.

In addition, even when the object recognition is performed on a cash voucher, the attendant terminal 20 may ask the store clerk for confirmation whether or not the captured image matches the selected candidate cash voucher according to a degree of similarity. However, in consideration of the importance of a cash voucher, it is generally preferable that the self-service checkout POS terminal 10 requests confirmation via the attendant terminal 20 regardless of the determined degree of similarity.

The program(s) executed by an apparatus of an embodiment is assumed to be provided in advance in a storage medium (e.g., ROM or storage unit) provided in each apparatus, but the present disclosure is not limited thereto. For example, the program may be recorded on a non-transitory computer readable recording medium such as a CD-ROM, a flexible disk (FD), a CD-R, or a Digital Versatile Disk (DVD), in a file in an installable format or an executable format. Furthermore, the program may be transmitted via a LAN, the Internet, or the like and downloaded and stored or temporarily stored in the relevant apparatus.

That is, any program executed by the apparatus of according to embodiments or modifications thereof of the present disclosure may be stored on a computer connected to a network such as the Internet and provided by being downloaded via the network, or may be configured to be provided or distributed via a network such as the Internet.

While certain embodiments have been described, these embodiments have been presented by way of example only, and are not intended to limit the scope of the present disclosure. Indeed, the novel methods and systems described herein may be embodied in a variety of other forms; furthermore, various omissions, substitutions, and changes in the form of the methods and systems described herein may be made without departing from the scope of the present invention as defined by the appended claims. The accompanying claims and their equivalents are intended to cover such forms or modifications as would fall within the scope of the invention as defined by the appended claims.

## Claims

1. A sales data processing apparatus, comprising:
an imaging unit; and
a control unit configured to:
cause the imaging unit to capture an image of an item;
identify a candidate item corresponding to the item by object recognition processing on the image;
transmit identification information for the candidate item and the image of the item to an external device; and
receive a confirmation result from the external device indicating whether or not the item included in the image matches the candidate article according to the transmitted identification information.

2. The sales data processing apparatus according to claim 1, wherein the item is a cash voucher or a coupon.

3. The sales data processing apparatus according to claim 1 or 2, further comprising:
image processing unit configured to execute an imaging processing on the image for improving visibility of the item in the image.

4. The sales data processing apparatus according to any of claims 1 to 3, further comprising:
a storage unit storing a plurality of candidate cash voucher images, wherein
the item is a cash voucher, and
the transmitted identification information includes at one candidate cash voucher image.

5. The sales data processing apparatus according to claim 4, further comprising:
a display screen, wherein
the control unit is further configured to display at least one candidate cash voucher image on the display according to a calculated degree of similarity of the cash voucher in the image to the at least one candidate cash voucher image and receive a user selection of a candidate cash voucher image.

6. The sales data processing apparatus according to any of claims 1 to 5, wherein the imaging unit captures a plurality of images of the item.

7. The sales data processing apparatus according to any of claims 1 to 6, wherein the imaging unit comprises a charge-coupled device array.

8. The sales data processing apparatus according to any of claims 1 to 7, wherein
the imaging unit configured to capture a color image, the image of the item is a color image, and
the candidate item is identified at least in part according to a color of the item.

9. A checkout system, comprising:
a plurality of self-service sales data processing devices; and
an attendant terminal connected to the plurality of self-service sales data processing devices, wherein
each self-service data processing device includes:
an imaging unit; and
a control unit configured to:
cause the imaging unit to capture an image of an item;
identify a candidate item corresponding to the item by object recognition processing on the image;
transmit identification information for the candidate item and the image of the item to the attendant terminal; and
receive a confirmation result from the attendant terminal indicating whether or not the item included matches the candidate article according to the transmitted identification information.

10. The checkout system according to claim 9, wherein the attendant terminal includes:
a communication interface for receiving the transmitted identification information;
a display screen for displaying the transmitted identification information; and
an operator input device for inputting an operator selection for indicating whether or not the item included in the image matches the candidate item and generating the confirmation result.

11. The checkout system according to claim 10, wherein the display screen displays the image of the item and a reference image of the candidate item included in the transmitted identification information.

12. The checkout system according to claim 10 or 11, wherein the operator input device comprises a touch panel on the display screen.

13. A non-transitory computer readable medium storing program instructions that when executed in a sales data processing apparatus causes a control unit thereof to perform a method comprising:
causing an imaging unit to capture an image of an item;
identifying a candidate item corresponding to the item by object recognition processing on the image;
transmitting identification information for the candidate item and the image of the item to an external device; and
receiving a confirmation result from the external device indicating whether or not the item included in the image matches the candidate article according to the transmitted identification information.

14. The non-transitory computer readable medium of claim 13, the method further comprising:
displaying at least one candidate item image on the display according to a calculated degree of similarity of the item in the image to the at least one candidate item image; and
receiving a user selection of a candidate item image.

15. The non-transitory computer readable medium of claim 13 or 14, wherein the external device is an attendant terminal of a checkout system.
